Europäisches Patentamt

European Patent Office

Office européen des brevets

(19)

(11) Veröffentlichungsnummer: **0 167 672**
**B1**

(12) **EUROPÄISCHE PATENTSCHRIFT**

(45) Veröffentlichungstag der Patentschrift: **13.06.90**

(21) Anmeldenummer: **84115565.8**

(22) Anmeldetag: **17.12.84**

(51) Int. Cl.⁵: **H 01 S 3/03, C 03 C 27/08**

(54) Gaslaserrohr und Verfahren zu seiner Herstellung.

(30) Priorität: **29.06.84 DE 3424118**

(43) Veröffentlichungstag der Anmeldung:
**15.01.86 Patentblatt 86/03**

(45) Bekanntmachung des Hinweises auf die
Patenterteilung:
**13.06.90 Patentblatt 90/24**

(84) Benannte Vertragsstaaten:
**BE CH DE FR GB IT LI NL SE**

(56) Entgegenhaltungen:
**AT-B- 320 894**
**CH-A- 611 082**
**DE-A-2 943 358**
**US-A-3 555 450**
**US-A-4 224 579**

(73) Patentinhaber: **Siemens Aktiengesellschaft**
**Wittelsbacherplatz 2**
**D-8000 München 2 (DE)**

(72) Erfinder: **Barth, Heinz**
**Schlierseestrasse 55**
**D-8000 München 90 (DE)**
Erfinder: **Hübner, Erwin, Dr. rer. nat.**
**Breitensteinstrasse 2**
**D-8018 Grafing (DE)**
Erfinder: **Heynisch, Hinrich, Dr. rer. nat. Dipl.-**
**Phys.**
**Im Birket 7**
**D-8032 Gräfelfing (DE)**
Erfinder: **Schneider, Adolf**
**Chiemgaustrasse 66**
**D-8000 München 90 (DE)**
Erfinder: **Brumme, Gerhard Dr.**
**Am Lochfeld 25**
**D-8088 Eching/Ammersee (DE)**

**Beschreibung**

Die Erfindung bezieht sich auf eine Gaslaserrohr anordnung gemäß dem Oberbegriff des Anspruchs 1. Eine solche Röhre wird beispielsweise in der US—PS 35 55 450 beschrieben.

Bei der bekannten Laserausführung befindet sich der optische Abschluss—Brewster-Fenster oder (Auskoppel-)spiegel—in einem metallischen Rahmen. Das Metallteil ist mit dem Abschlußelement über ein (Hart- oder Glas-)Lot verbunden und mit dem Rohr hartverlötet oder verschweißt. Auf diese Weise kommt eine hermetische Abdichtung zustande, allerdings um den Preis hoher Prozeßtemperaturen, die die optischen Qualitäten des Abschlußelements mehr oder weniger stark beeinträchtigen.

Deshalb ist in der zitierten Patentschrift auch schon vorgesehen, den Fenster- oder Spiegelkörper zu beiden Seiten über seine Fassung hinausragen zu lassen und als Rahmen eine dünne Membran mit gewelltem Profil und großem Außendurchmesser zu nehmen. Eine solche Konstruktion gibt die Möglichkeit, das optische Element erst nach seiner Einlötung zu polieren und ggf. zu beschichten, und fängt bei den anschließenden Wärmeprozessen einen erheblichen Teil der Thermospannungen ab. Die gesamte Anordnung ist aber nicht sonderlich stabil; insbesondere kann die Laserleistung durch mechanische Einwirkungen, die das Abschlußelement in Schwingungen versetzen und/oder verkippen, abnehmen.

Die Halterung wird weniger stoßempfindlich, wenn man das optische Element in eine metallische, thermisch angepaßte Rinscheibe einlötet, diese Einheit auf eine mit dem Laserrohr verschmolzene Metall-Lochblende legt und beide Metallteile randseitig miteinander verschweißt (US—PS 37 17 823). Dieser Doppelflansch muß während des Schweißens, wie in der zitierten Literaturstelle ausgeführt ist, zwischen der Schweißstelle und dem lichtdurchlässigen Körper einen Temperaturabfall von 1200°C sicherstellen; beide Metallplatten müssen daher sehr dünn sein und/oder einen großen Außenduchmesser haben. Die gesamte Aufhängung ist infolgedessen noch nicht besonders dejustiersicher und/oder beansprucht beträchtliche Querabmessungen und ist überdies recht aufwendig, und zwar allein schon deshalb, weil man drei statt zwei vakuumdichte Verbindungen herstellen muß.

Der Erfindung liegt daher die Aufgabe zugrunde, bei einem Plasmarohr der eingangs genannten Art die optischen Abschlüsse so einzufassen, daß die Anordnung kompakt und robust ist, die Abschlußelemente unter normalen Betriebsbedingungen in Position halten kann und zudem keinen besonderen Fertigungsaufwand verlangt. Diese Aufgabe wird erfindungsgemäß durch eine Gaslaserrohranordnung mit den Merkmalen des Patentanspruchs 1 gelöst. Wenn anspruchsgemäß Flansch und Platte "thermisch angepaßt" sein sollen, so bedeutet dies, daß zwischen beiden Teilen eine dauerhaft gasdichte Glaslotverbindung hergestellt werden kann. Normalerweise ist dies möglich, wenn der Flansch im interessierenden Temperaturbereich einen mittleren thermischen Ausdehnungskoeffizienten hat, der zwischen dem 0,9- und 1,2-Fachen des entsprechenden Plattenkoeffizienten liegt. Eine besonders sichere Verbindung kommt dabei zustande, wenn sich der Flansch mit der Temperatur etwas stärker ausdehnt als die Platte.

Die erfindungsgemäß gestaltete Metallfassung ist ein starres Teil mit einer entsprechend großen Wandstärke von vorzugsweise mindestens 1 mm. Dennoch ist ihr Wärmewiderstand auf der Strecke zwischen dem Außenrand und der Strahldurchtrittsöffnung relativ hoch, weil die Scheibe über ein mäanderförmiges Profil mit recteckigen Windungen verfügt. Diese Profilform vergrößert die Weglänge in einem weit stärkerem Maß als etwa ein Wellenprofil, wie es in der US—PS 35 55 450 aus Elastizitätsgründen vorgesehen ist. Insofern kann der Metallrahmen auch relativ geringe Querabmessungen erhalten und verlangt kein zusätzliches Anpaßteil, das den Scheibendurchmesser auf den Rohrdurchmesser zurückführen müßte.

Die Lochscheibe selbst ist relativ einfach zu fertigen: Das Mäanderprofil könnte beispielsweise durch Eindrehen oder Einfräsen von Ringnuten erzeugt werden.

Der Gedanke, eine Brewster-Fensteranordnung mit konzentrischen Nuten zu versehen, ist an sich aus der DE—OS 3307233 bekannt. Die dort vorgesehenen Nuten befinden sich allerdings im Fensterkörper selbst und dienen lediglich als ein elastischer Puffer, der im Betrieb auftretende, durch thermische Fehlanpassungen verursachte Spannungen vom zentralen Fensterbereich fernhalten soll.

Vorteilhafte Ausgestaltungen und Weiterbildungen der Erfindung sind Gegenstand zusätzlicher Ansprüche.

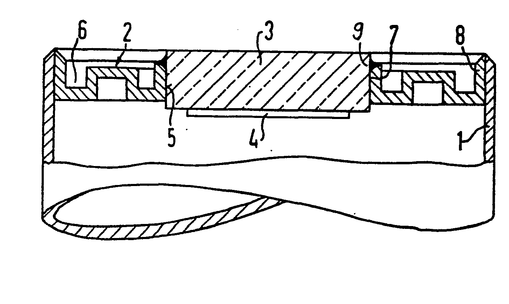

Der Lösungsvorschlag soll nun anhand eines bevorzugten, in der beigefügten Zeichnung dargestellten Ausführungsbeispiels näher erläutert werden.

Die Figur zeigt in einem Seitenschnitt das auskoppelseitige Rohrende eines "Sealed off"-$CO_2$-Lasers, der für einige 10W Ausgangsleistung vorgesehen ist und beispielsweise in der Medizin eingesetzt werden könnte.

Dieses Rohrende enthält einen Metallzylinder 1, einen Flansch in Form einer Lochscheibe 2 und eine Abschlußplatte in Form eines Spiegelkörpers 3.

Der Spiegelkörper ist innenseitig mit einer dielektrischen Mehrfachschicht 4 überzogen, die für eine Wellenlänge von 10,6 μm teildurchlässig ist. Der Körper selbst besteht aus Zinkselenid, das in diesem Wellenlängenbereich praktisch nicht absorbiert. Für die Scheibe ist eine $Ni_{48}Fe_{52}$-Legierung gewählt, die thermisch an ZnSe angepaßt ist. Die Scheibe hat eine Strahldurchtrittsöffnung 5, in die der Spiegelkörper mit beidseits vorspringender Grundfläche eingesetzt ist, sowie alternierend in beide Schiebenseiten eingebrachte Ringnuten 6. Die Nuten sind so dimensioniert, daß die Fassung überall eine Mindestwandstärke von mindestens 1 mm hat. Im Bereich der Öffnung und des Außenrandes läuft die Scheibe jeweils in einen vom anderen Rohrende wegweisenden Steg 7, 8 aus. Die Stege liegen dem Spiegelkörper bzw. dem Metallzylinder an und sind an ihren äußeren Enden abgeschrägt und über ein Glaslot 9 bzw. eine Schweißverbindung vakuumdicht fixiert.

Der Rohrabschluß wird folgendermaßen hergestellt: Zunächst verlötet man den ZnSe-Körper mit der Metallscheibe unter Verwendung eines stabilen oder kristallisierenden Glaslots, das entweder als Pulver oder in einer vorgepreßten und -gesinterten Form vorliegt. Dann werden die beiden Grundflächen des Körpers poliert und die Innenfläche mit den erforderlichen dielektrischen Schichten versehen. Anschließend setzt man die Scheibe in den Metallzylinder und führt die Schweißverbindung durch. In Fällen, in denen der Abstand zwischen den beiden Scheibenstegen sehr gering ist und/oder der Spiegelkörper besonders geschont werden muß, sollte das Laserrohrende während des Schweißvorganges noch mit einem Kupferring umschlossen werden, der einen Teil der zugeführten Wärme gleich nach außen ableitet.

**Patentansprüche**

1. Gaslaserrohr anordnung mit folgenden Merkmalen:
   1) das Gaslaserrohr (1) ist an seinen beiden Enden mit jeweils einem optischen Element vakuumdicht abgeschlossen;
   2) wenigstens eines der beiden Elemente enthält einen Flansch (2) sowie eine Abschlußplatte (3);
   3) der Flansch (2)
   a) besteht aus Metall,
   b) hat die Form einer Scheibe mit einer zentralen Öffnung (Strahldurchtrittsöffnung 5) und einem Profil, das mehrere, unmittelbar aufeinander folgende und abwechselnd nach einer der beiden Flanschseiten gerichtete Windungen enthält, und
   c) ist mit dem Gaslaserrohr (1) verbunden;
   4) die Abschlußplatte (3)
   a) besteht aus einem für die Laserstrahlung durchlässigen Material,
   b) ist in die Strahldurchtrittsöffnung (5) eingesetzt und mit dem Flansch (2) über ein Glaslot (9) verbunden und
   c) ragt in Richtung der Plattennormalen zu beiden Seiten jeweils über die Tangentialebene des Flansches (2) hinaus;
   dadurch gekennzeichnet, daß der Flansch (2)
   d) aus einem thermisch an das Material der Abschlußplatte (3) angepaßten Metall besteht,
   e) starr ausgebildet ist,
   f) ein aus rechtwinkligen Windungen gebildetes Mäanderprofil hat und
   g) in das Gaslaserrohr (1) eingesetzt ist.

2. Gaslaserrohranordnung nach Anspruch 1, dadurch gekennzeichnet, daß der Flansch (2) eine Wandstärke von mindestens 1 mm hat.

3. Gaslaserrohranordnung nach Anspruch 1 oder 2, dadurch gekennzeichnet, daß der Flansch (2) der Abschlußplatte (3) und dem Gaslaserrohr (1) jeweils mit einem vom anderen Rohrende wegweisenden Steg (7, 8) anliegt und jeweils im Bereich der freien Stegenden mit den beiden Teilen verbunden ist.

4. Gaslaserrohranordnung nach einem der Ansprüche 1 bis 3, dadurch gekennzeichnet, daß die Abschlußplatte aus ZnSe und der Flansch (2) aus $Ni_{48}Fe_{52}$ bestehen.

5. Verfahren zur Herstellung einer Gaslaserrohranordnung gemäß Anspruch 1, dadurch gekennzeichnet, daß man zunächst in den Flansch (2) Nuten (6) eindreht, anschließend den Flansch (2) mit der Abschlußplatte (3) glasverlötet, hiernach die Oberfläche der Abschlußplatte (3) glättet und ggf. beschichtet und schließlich den Flansch (2) mit dem Gaslaserrohr (1) verschweißt, wobei man das Gaslaserrohr (1) während des Schweißvorganges auf der Höhe des Flansches (2) mit einer metallischen Manschette umschließt.

**Revendications**

1. Agencement pour tube pour laser à gaz ayant les caractéristiques suivantes:
   1) le tube pour laser à gaz (1) est fermé à ses deux extrémités d'une manière étanche au vide par des éléments optiques;
   2) au moins l'un des deux éléments comporte une bride (2) ainsi qu'une plaque de fermeture (3);
   3) la bride (2)
   a) est en métal,
   b) a la forme d'un disque ayant une ouverture centrale (ouverture de passage du rayonnement 5) et un profil qui comporte plusieurs spires se succédant immédiatement et dirigées alternativement vers l'un des deux côtés de la bride, et
   c) est reliée au tube pour laser à gaz (1);
   4) la plaque de fermeture (3)
   a) est en un matériau transparent au rayonnement laser,
   b) est introduite dans l'ouverture de passage du rayonnement (5) et est reliée à la bride (2) par un verre de soudure (9), et
   c) s'étend au-delà, dans la direction des normales aux plaques et des deux côtés, des plans tangentiels de la bride (2);
   caractérisé en ce que la bride (2)
   d) est en un métal adapté thermiquement au matériau de la plaque de fermeture (3),
   e) est constituée de manière rigide,
   f) possède un profil en méandres formé des spires à angle droit, et
   g) est introduite dans le tube pour laser à gaz (1).

2. Agencement pour tube pour laser à gaz suivant la revendication 1, caractérisé en ce que la bride (2) a une épaisseur de paroi d'au moins 1 mm.

3. Agencement pour tube pour laser à gaz suivant la revendication 1 ou 2, caractérisé en ce que la bride (2) s'applique respectivement à la plaque de fermeture (3) et au tube pour laser à gaz (1) par des nervures (7, 8) dirigées vers l'autre extrémité du tube et est reliée à ces deux parties dans la région des extrémités libres des nervures.

4. Agencement pour tube pour laser à gaz suivant l'une des revendications 1 à 3, caractérisé en ce que la plaque de fermeture est en ZnSe et la bride (2) est en $Ni_{48}Fe_{52}$.

5. Procédé de fabrication d'un agencement pour tube pour laser à gaz suivant la revendication 1, caractérisé en ce que l'on réalise d'abord au tour des gorges (6) dans la bride (2), on soude ensuite, à l'aide d'une soudure de verre, la bride (2) à la plaque de fermeture (3), on polit ensuite la surface de la plaque de fermeture (3) et, le cas échéant, on lui applique un revêtement et, enfin, on soude la bride (2) au tube pour laser à gaz (1) en entourant, pendant le processus de soudage, le tube pour laser à gaz (1) jusqu'au niveau de la bride (2) d'une manchette métallique.

**Claims**

1. Gas laser tube assembly having the following features:

1) the gas laser tube (1) is closed off vacuum-tightly at both its ends by an optical element in each case;

2) at least one of the two elements includes a flange (2) and a terminating plate (3);

3) the flange (2)

a) consists of metal,

b) has the shape of a washer with a central opening (beam passage opening 5) and a profile, which includes a plurality of turns immediately following each other and pointing alternately towards one of the two sides of the said flange, and

c) is connected to the gas laser tube (1);

4) the terminating plate (3)

a) consists of a material transparent to the laser radiation,

b) is inserted into the beam passage opening (5) and connected to the flange (2) by a glass solder (9) and

c) extends in the direction of the normal to the plate on both sides, beyond the tangential plane of the flange (2) in each case;

characterized in that the flange (2)

d) consists of a metal thermally adapted to the material of the terminating plate (3),

e) is of a rigid design,

f) has a meandering profile formed from right-angled turns and

g) is inserted into the gas laser tube (1).

2. Gas laser tube assembly according to Claim 1, characterized in that the flange (2) has a wall thickness of at least 1 mm.

3. Gas laser tube assembly according to Claim 1 or 2, characterized in that the flange (2) bears against the terminating plate (3) and the gas laser tube (1) in each case with a rib (7, 8) pointing away from the other end of the tube and connected in each case to the two parts in the vicinity of the free rib ends.

4. Gas laser tube assembly according to one of Claims 1 to 3, characterized in that the terminating plate consists of ZnSe and the flange (2) consists of $Ni_{48}Fe_{52}$.

5. Method of manufacturing a gas laser tube assembly according to Claim 1, characterized in that initially grooves are cut into the flange (2), subsequently the flange (2) is glass-soldered to the terminating plate (3), then the surface of the terminating plate (3) is smoothed and, if appropriate, coated and finally the flange (2) is welded to the gas laser tube (1), the gas laser tube (1) being enclosed by a metallic sleeve, on a level with the flange (2), during the welding operation.